# EUROPEAN PATENT SPECIFICATION

(11) **EP 1 436 998 B1**
(45) Date of publication and mention of the grant of the patent: **26.12.2007**
(21) Application number: 02786422.2
(22) Date of filing: 17.10.2002
(51) Int. Cl.: H04N 7/167, G06F 1/00

(54) **APPARATUS AND METHOD FOR ACCESSING MATERIAL USING AN ENTITY LOCKED SECURE REGISTRY**
VORRICHTUNG UND VERFAHREN ZUM ZUGREIFEN AUF MATERIAL UNTER VERWENDUNG EINER SICHEREN ENTITÄTSVERRIEGELTEN REGISTRIERDATENBANK
APPAREIL ET PROCEDE POUR L'ACCES A UN MATERIEL A L'AIDE D'UN REGISTRE SECURISE VERROUILLE PAR ENTITE

(30) Priority: 18.10.2001 US 347917 P; 26.12.2001 US 36128
(43) Date of publication of application: 14.07.2004
(73) Proprietor: MACROVISION CORPORATION, Santa Clara, CA 95050 (US)
(72) Inventor: COLLIER, David, Gilroy, CA 95020 (US); FENNEY, Robert, Studio City, CA 91604 (US)
(74) Representative: Needle, Jacqueline
(86) International application number: PCT/US2002/033071
(87) International publication number: WO 2003/034733

(56) References cited:
- WO-A-01/31923
- WO-A-97/05720
- US-A- 6 002 772
- US-A- 6 005 938
- US-B1- 6 286 103

## Description

### FIELD OF THE INVENTION

The present invention generally relates to material accessing techniques and in particular, to an apparatus and method for accessing material using an entity-locked secure registry.

### BACKGROUND OF THE INVENTION

Providers of material demand compensation for the use of their material or content. Unauthorized use cheats these providers of their due compensation. Therefore, techniques for preventing such unauthorized use have been and continue to be developed.

Transfers of material are commonly performed over a secure channel such as those using authentication and key exchange techniques. Once the material is transferred, a recipient system should be secure so that authorized use, copying and/or transferring of the material is controlled and unauthorized use, copying and transferring of the material is prevented.

### OBJECTS AND SUMMRY OF THE INVENTION

Accordingly, two objects of the present invention are to provide an apparatus and method for accessing material that is secure.

Other objects are to provide an apparatus and method for accessing material that carefully controls authorized use, copying or transferring of material.

Still other objects are to provide an apparatus and method for accessing material that prevents or discourages unauthorized use, copying and transferring of material.

These and additional objects are accomplished by the various aspects of the present invention wherein briefly stated, one aspect is an apparatus for accessing material, comprising: a secure registry encrypted with a registry key and storing another key useful for decrypting material; and a control module configured to decrypt the secure registry using the registry key for retrieval of the another key if a correct entity identification is received.

Another aspect is a method for accessing material, comprising: decrypting a secure registry with a registry key; retrieving another key from said decrypted secure registry; and decrypting encrypted material using said another key to access said material.

Additional objects, features and advantages of the various aspects of the present invention will become apparent from the following description of its preferred embodiments, which description should be taken in conjunction with the accompanying drawings.

### BRIEF DESCRIPTION OF THE DRAWINGS

**FIG. 1** illustrates, as an example, a host including an apparatus for accessing material in a file using an entity-locked secure registry, utilizing aspects of the present invention.
**FIG. 2** illustrates, as an example, a system including an apparatus for accessing material in streaming media using an entity-locked secure registry, utilizing aspects of the present invention.
**FIGS. 3∼9** illustrate, as examples, various hosts and systems including an apparatus for accessing material using an entity-locked secure registry, utilizing aspects of the present invention.
**FIGS. 10∼14** illustrate, as examples, various methods for accessing material, utilizing aspects of the present invention.

### DETAILED DESCRIPTION OF THE PREFERRED EMBODIMENT

As used herein: the terms "audio-visual content" or "A/V content" includes audio, visual and other multimedia content including motion pictures, music, the spoken word, photos, and printed text; "material" and "content" may be used interchangeably, and includes A/V and other distributed content including computer programs or software; and "proprietary material" means material protected by contract or intellectual property law.

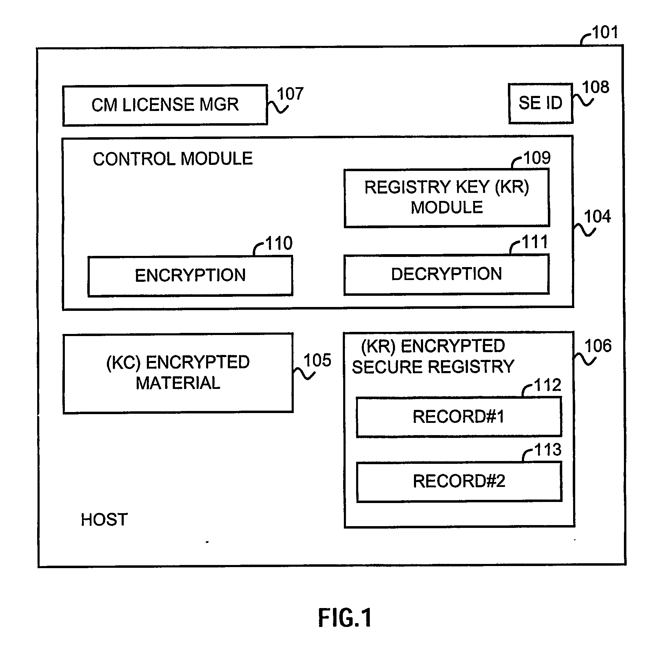

**FIG. 1** illustrates, as an example, a host **101** including a control module **104,** an encrypted material **105,** and an entity-locked secure registry **106** that stores access and other information for the encrypted material **105.** Also included in the host **101** are a control module license manager **107**, and a sensed entity identification ("SE ID") **108** preferably provided by a corresponding entity in response to a request from the control module **104.** The host **101** may be a personal computer, an entertainment unit such as a set-top box and television set, a network appliance, a wireless communicating device such as a personal digital assistant ("PDA") or other type of electronic device or system with adequate memory and computational power.

The sensed entity ID **108** uniquely identifies an entity associated with the secure registry **106.** The entity may be the host **101,** a portable hardware device connectable to the host **101,** or a user of the host **101.** In the case where the entity is the host **101,** the sensed entity ID **108** is, for examples, a manufacturer's assigned serial number such as for a computer ID, a network interface card ID or a hard disk drive ID. Where the entity is a portable hardware device connectable to the host **101,** the sensed entity ID **108** is, for examples, a smart card ID, a dongle, or a content storage unit (e.g., optical media) ID. On the other hand, in the case where the entity is a user of the host **101,** the sensed entity ID **108** is, for examples, a credit card number of the user or a conventional user ID entered into an input device, such as a keyboard, by a user of the host **101,** or a biometrics ID of the user such as the user's fingerprint or speech sensed.by a biometrics device coupled to the host **101.**

The control module **104** includes a registry key (KR) module **109,** encryption module **110,** and decryption module **111.** The control module **104** is preferably implemented as a computer program running on a processor included in the host **101.** Alternatively, it is implemented as one or more cooperative circuits, or a combination of hardware, software and/or firmware in a conventional manner. The control module **104** is preferably license-locked to the host **101** using a control module license manager **107** comprising commercially available software such as FLEX1m®, a product of GLOBEtrotter Software, Inc., a Macrovision company. Alternatively, it is license-locked to another entity such as a portable hardware device connectable to the host **101,** or a user of the host **101.** The registry key (KR) module **109** provides a registry key (KR) for decrypting the secure registry **106,** and encrypting the decrypted version of the secure registry **106.** The encryption module **110** and decryption module **111** respectively perform conventional encryption and decryption functions.

The encrypted material **105** comprises, for example, A/V or other content or proprietary material that has been encrypted for security purposes with at least one content key (KC). Although the decryption module **111** may decrypt the encrypted material **105** with the at least one content key (KC) in order for a user of the host **101** to use the material according to authorized usage rights, preferably, such decryption is performed in a plug-in module to a content player. In this latter case, the control module **104** securely transmits the at least one content key (KC) and relevant terms of a license to the plug-in module to facilitate content decryption and usage. Encrypted material **105** may be stored in host **101** or may be accessed from an inserted media storage unit such as optical media (e.g., CD or DVD media).

The secure registry **106** stores in records, such as record#1 **112** and/or record#2 **113,** access and other information for the encrypted material **105,** such as one or more keys that are useful for decrypting the encrypted material **105** and usage rights taking the form of a license defining how the decrypted version of the encrypted material **105** may be used. In one embodiment, the at least one content key (KC) used to decrypt the encrypted material **105** is stored in the secure registry **106.** In another embodiment where the at least one content key (KC) is stored with or separate from the encrypted material **105** and encrypted with at least one license key (KL), the at least one license key (KL) is included in the secure registry **106** instead. Other information that may be stored in the secure registry **106** include confidential information particular to the host **101** or a user of the host **101,** such as one or more private keys (KUP) and/or other cryptographic secrets. The secure registry **106** is referred to as being "secure", because, among other things, it is maintained in an encrypted state except for a temporary period when a decrypted version of it is being used. It is also referred to as being "entity-locked", because a registry key (KR) that is associated with the sensed entity ID **108** is used to generate a decrypted version of it in system or other temporary memory of the host **101** so that the decrypted version may be used, if the sensed entity ID **108** matches a reference entity ID stored in the secure registry **106** or retrieved from the registry key module **109** or provided by the control module license manager **107.** Although it is possible that any one or all of the control module **104,** encrypted material **105** and secure registry **106** may be inappropriately copied or transferred, the examples described in the various apparatuses and methods herein prevent these from being effectively used by another entity other than the one that the secure registry **106** is locked to or associated with.

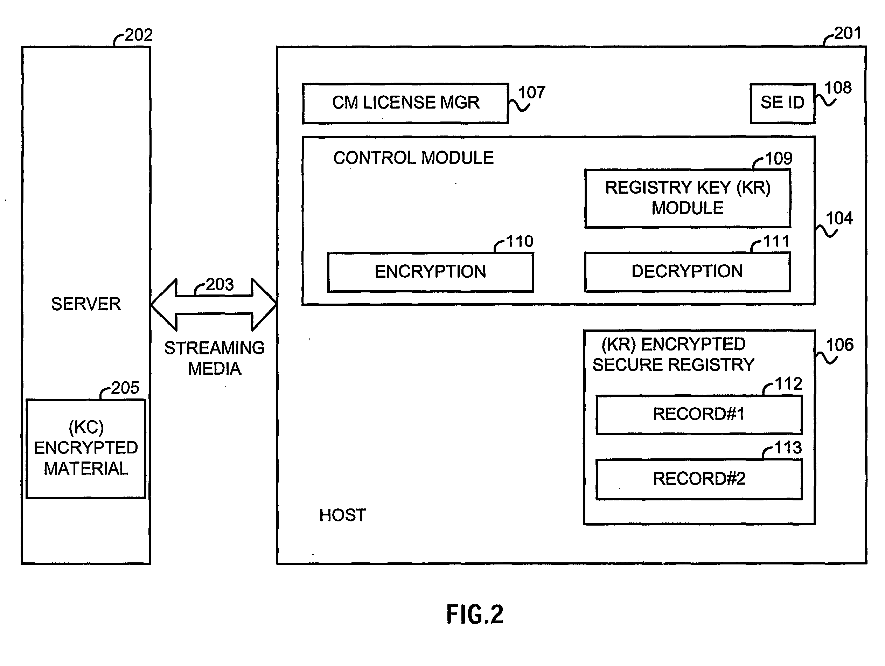

**FIG. 2** illustrates a system including a host **201** and a server **202** communicating through a communication medium **203** such as the Internet. The host **201** is similarly configured as the host **101** of **FIG. 1,** except that in this case, instead of storing an encrypted material file such as encrypted material **105** in **FIG. 1,** it receives a copy of encrypted material **205** stored on the server **202** as streaming media, such as in an MPEG-4 bit stream, over the communication medium **203.** The control module **104** prepares for receiving the streaming material by first retrieving the registry key (KR) from the registry key module **109,** and decrypting the secure registry **106** with the registry key (KR) and retrieving one or more keys to access the encrypted material from the decrypted version of the secure registry **106** if a correct entity identification is received. The control module **104** determines whether or not the correct entity identification is received by comparing a reference entity ID against the sensed entity ID **108.** If they match, then the control module **104** determines that the correct entity identification has been received. Processing of the received streaming media is then performed "on-the-fly" by the control module **104** (or a media player including a plug-in module) decrypting the received streaming media and using it according to usage rights also retrieved from the decrypted version of the secure registry **106.**

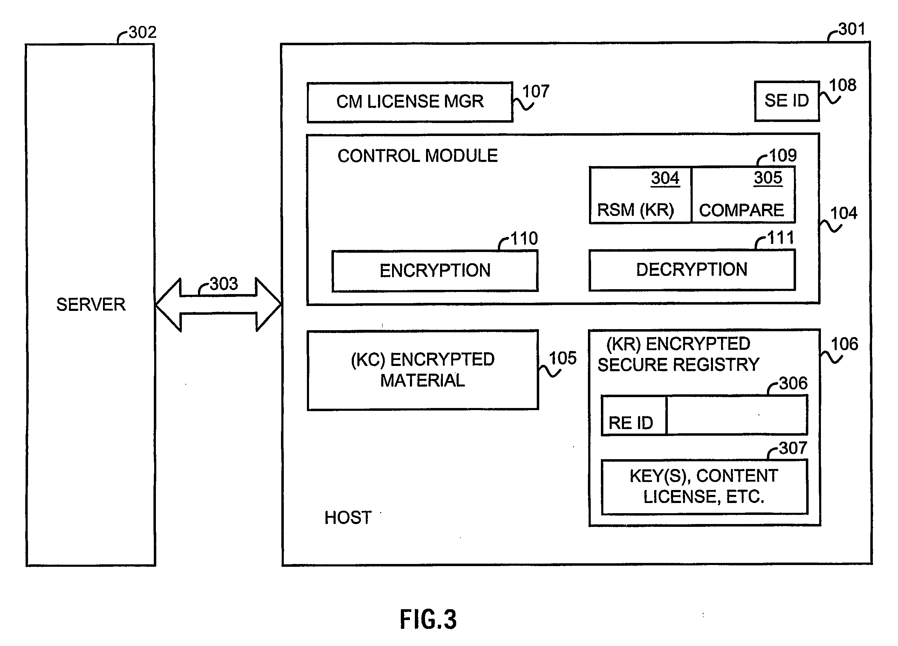

**FIG. 3** illustrates another system including a host **301** and a server 302 communicating through a communication medium **303.** The host **301** is one embodiment of the host **101** of **FIG. 1,** in which, the registry key (KR) module **109** comprises a replaceable software module ("RSM") **304** providing a registry key (KR) for decrypting the secure registry **106,** and a compare module **305** for comparing the sensed entity ID ("SE ID") **108** against a reference entity identification ("RE ID") stored in a record **306** of the secure registry **106.** The replaceable software module **304** is preferably provided by the remote server **302,** for examples, as a dynamic link library module (".dll"), Java applet, Window COM object, or Active X object with the registry key (KR) included as data therein. It is referred to as being "replaceable," because it is separately downloadable from the rest of the control module that is referred to herein as the control program. Once downloaded, it can be immediately used by the control program. Although the reference entity ID is stored in the secure registry **106** in this example, alternatively and preferably, it is provided along with the registry key (KR) in the replaceable software module **304** after the server providing the replaceable software module **304** to the host **301** receives the sensed entity ID **108** directly or indirectly from the host **301.**

Before a user of the host **301** is allowed to use the encrypted material **105,** the control module **104** first reads the registry key (KR) from the replaceable software module **304,** "opens" the secure registry **106** by generating a decrypted version of it in memory using decryption module **111,** reads the reference entity ID from record **306** in the decrypted version of the secure registry **106,** reads the sensed entity ID **108,** and compares the reference and sensed entity ID's using compare module **305.**

If the reference and sensed entity ID's match, then the user is allowed to use the encrypted material **105** according to usage rights that are defined, for example, in a content license stored in record **307** of the decrypted version of the secure registry **106.** To allow usage of the encrypted material **105,** the control module **104** first retrieves a key from the decrypted version of the secure registry **106.** In this example, the retrieved key is at least one content key (KC) that is used by the decryption module **111** to generate a decrypted version of the encrypted material **105** for use.

On the other hand, if the reference and sensed entity ID's do not match, then the user is not allowed to use the encrypted material **105.** In particular, in such case, the control module **104** (or a plug-in to a media or content player) does not decrypt the encrypted material **105,** and instead, displays an error message on the host screen indicating such failure to a user of the host **301.** A log of the failed attempt may also be kept in a secret location.

It is prudent to change the registry key (KR) from time to time for security purposes. To do so, the remote server **302** first transmits a replaceable software module such as **304** that is linked to the control module **104.** The replaceable software module provides two registry keys in this case, a new registry key and the old registry key. The old registry key is used to generate a decrypted version of the secure registry **106,** and the new registry key is used to encrypt the decrypted version. The original secure registry **106** is then replaced with the newly encrypted version. Subsequent decrypting of the secure registry would then be performed using the new registry key.

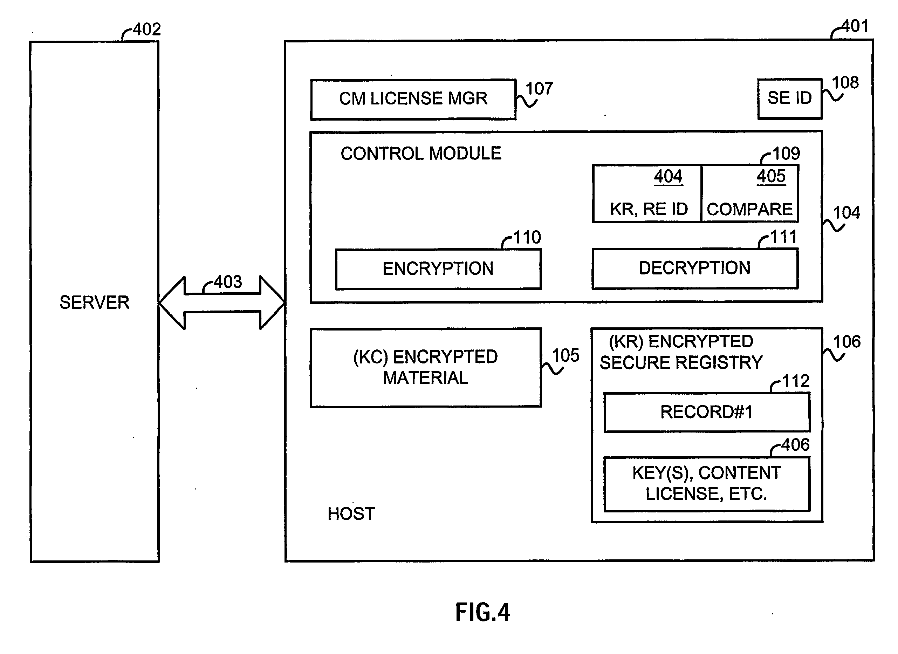

**FIG. 4** illustrates a system including a host **401** and a server **402** communicating through a communication medium **403.** The host **401** is another embodiment of the host **101** of **FIG. 1,** in which, the registry key (KR) module **109** is integrated directly into the binary executable code of the control module **104** such that if either the registry key (KR) or reference entity ID ("RE ID") included therein is subsequently changed, the entire control module **104** would have to be replaced. The registry key (KR) module **109** in this example also includes a compare module **405** for comparing the sensed entity ID ("SE ID") **108** against the reference entity ID. The remote server **402** provided the binary executable code of the control module **104** to the host **401** after receiving information of the sensed entity ID **108** from the host **401.** Access to the encrypted material **105** is then performed in a similar manner as described in reference to **FIG. 3.** Although the reference entity ID is integrated into the binary executable code of the control module **104** in this example, it could also be stored in one of the records of the secure registry **106,** as in the host **301** of **FIG. 3.**

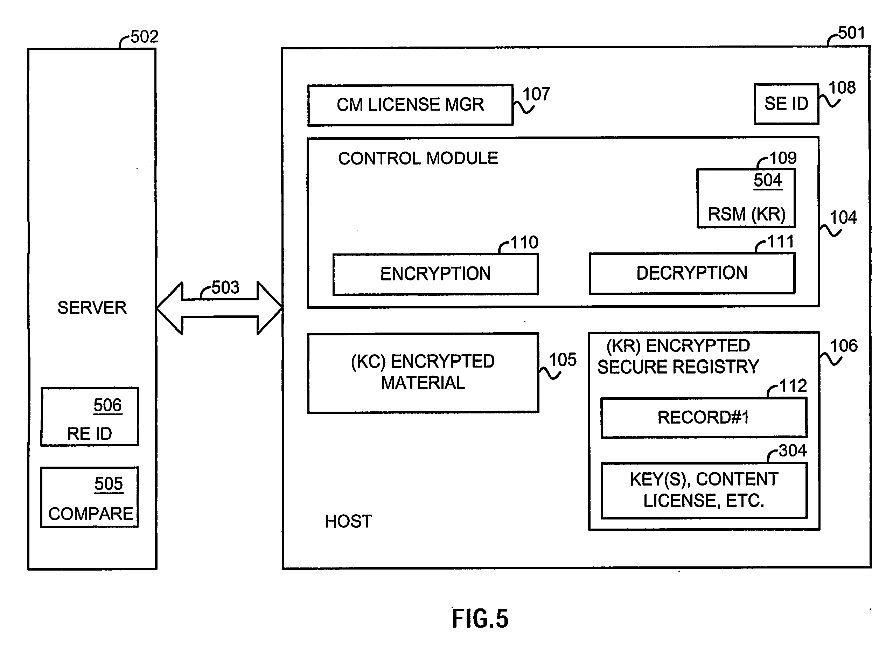

**FIG. 5** illustrates a system including a host 501 and a server **502** communicating through a communication medium **503.** The host **501** is another embodiment of the host **101** of **FIG. 1.** In the host **501,** the registry key (KR) module **109** includes a replaceable software module **504** such as the replaceable software module **304** in **FIG. 3.** However, a reference entity ID **506** and compare module **505** are located on the remote server **502,** instead of on the host **501.** As in the prior examples, the reference entity ID **506** indicates the entity that is authorized to access contents of the secure registry **106,** and is provided as the sensed entity ID **108** to the server **502** at the time of licensing the encrypted material **105** for use by the entity. In one embodiment, the entity itself provides the sensed entity ID **108** to the server **502** so as to define the reference entity ID **506.** In another embodiment, an intermediary such as a separate licensing server provides the sensed entity ID **108 to** the server **502.**

When a user of the host **501** requests access to the encrypted material **105,** the control module **104** transmits the sensed entity ID **108** to the server **502.** The server **502** then compares the received sensed entity ID **108** against the reference entity ID **506** using the compare module **505.** If the reference and sensed entity IDs match, then the server **502** sends a transaction approval to the host **501.** The control module **104** of the host **501** then reads the registry key (KR) provided in the replaceable software module **504,** decrypts the secure registry **106** with the registry key (KR), retrieves at least one content key (KC) stored in a record **304** of the secure registry **106,** and uses the at least one content key (KC) to decrypt the encrypted material **105.**

In a variation of the host **501,** the registry key (KR) is integrated directly into the binary executable code of the control module **104** such as described in reference to **FIG. 4,** instead of in the replaceable software module **504.** In all other respects, configuration and use of this variation is generally the same as the host **501** operating in cooperation with the server **502.**

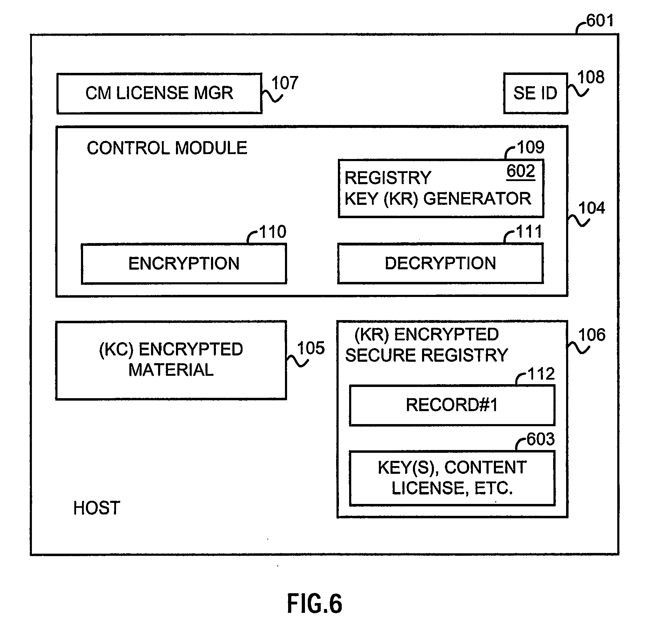

**FIG. 6** illustrates a host **601** that is another embodiment of the host **101** of **FIG. 1.** In the host **601,** the registry key (KR) module **109** comprises a registry key generator **602** that generates the registry key (KR) from the sensed entity ID **108** preferably in such a fashion that the generated registry key (KR) is unique to the sensed entity ID **108** (i.e., no other sensed entity ID generates the same registry key as the sensed entity ID **108)** and repeatable (i.e., the same registry key output is generated each time for the same sensed entity ID input). In one embodiment, the registry key generator **602** is implemented as a pseudo-random number generator that generates the registry key (KR) as a pseudo-random number from the sensed entity ID **108** that is provided as a seed to the pseudo-random number generator. For security reasons, the algorithm for the pseudo-random number generator is kept secret.

Since the secure registry **106** is encrypted and decrypted with the registry key (KR) generated from the sensed entity ID **108,** any other sensed entity ID (different than the sensed entity ID **108)** provided to the registry key generator **602** will not generate a registry key (KR) capable of decrypting the secure registry **106** to read its contents. Consequently, access keys and other information related to the encrypted material **106,** that are stored in the secure registry **106,** are not available to an unauthorized entity. Although implementation of the registry key generator **602** adds some complexity to the registry key module **109,** the elimination of a compare module such as **305** in **FIG. 3,** helps compensate somewhat for such added complexity.

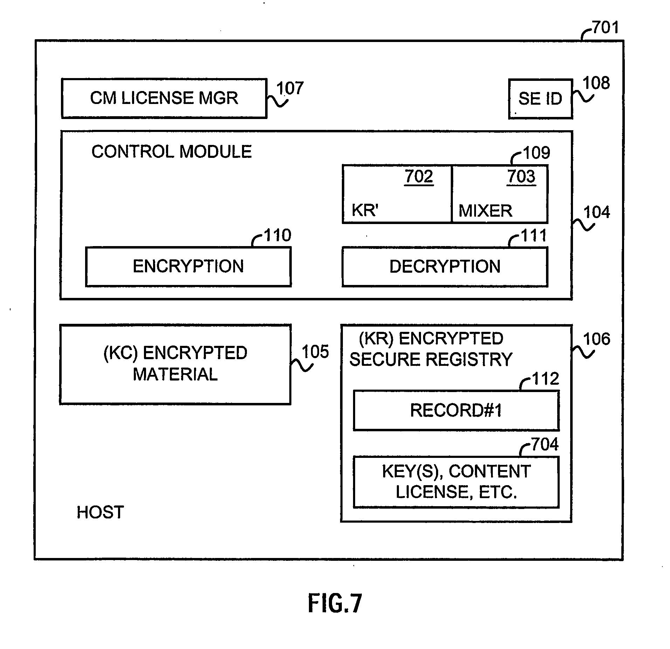

**FIG. 7** illustrates a host **701** that is another embodiment of the host **101** of **FIG. 1.** In the host **701,** the registry key (KR) module **109** includes an embedded key (KR') **702** and a mixer **703** that generates the registry key (KR) by mixing the embedded key (KR') **702** and a sensed entity ID **108** (or a pseudo-random number generated from the sensed entity ID **108)** preferably in such a fashion that the generated registry key (KR) is unique to the sensed entity ID **108** (i.e., no other sensed entity ID generates the same registry key as the sensed entity ID **108)** and repeatable (i.e., the same registry key output is generated each time for the same sensed entity ID input). In one embodiment, the embedded key (KR') **702** is provided in a replaceable software module such as **304** in **FIG. 3** to the host **701** from a remote server. In another embodiment, the embedded key (KR') **702** is integrated directly into the binary executable code of the control module **104,** which is provided to the host **701** from a remote server. In both embodiments, the remote server can effectively change the registry key (KR) by providing a new and old embedded key in basically the same manner as described in reference to **FIG. 3.**

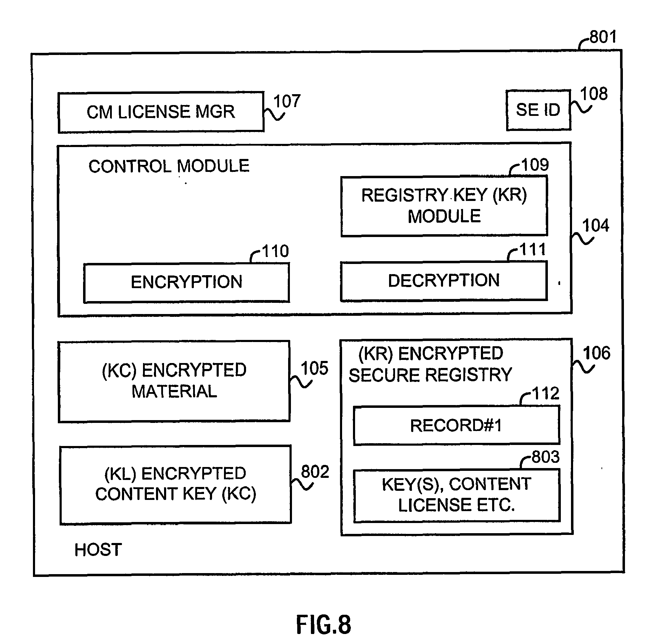

**FIG. 8** illustrates a host **801** that is another embodiment of the host **101** of **FIG. 1.** In the host **801,** the at least one content key (KC) used to decrypt the encrypted material **105** is itself, encrypted with at least one license key (KL) and provided in a file **802** along with the encrypted material **105** by a remote server. The at least one license key (KL), as its name suggests, is associated with a license providing usage rights to the encrypted material **105.** The at least one license key (KL) and the license are stored, for example, in a record **803** of the secure registry **106,** so that a user of the host **801** may only access the encrypted material **105** after the at least one license key (KL) has been retrieved from the secure registry **106,** the decryption module **111** has decrypted the at least one content key (KC) using the retrieved at least one license key (KL), and the encrypted material **105** has been decrypted using the at least one content key (KC). The control module **104** (or plug-in to a media or content player) that decrypts the encrypted material **105** then controls usage of the decrypted version of the encrypted material **105** according to its corresponding content license retrieved from the secure registry **106.** Access to the secure registry **106** for retrieval of the at least one license key (KL) and the content license is performed in the same manner as described, for example, in reference to **FIG. 1,** and other examples described herein as applicable.

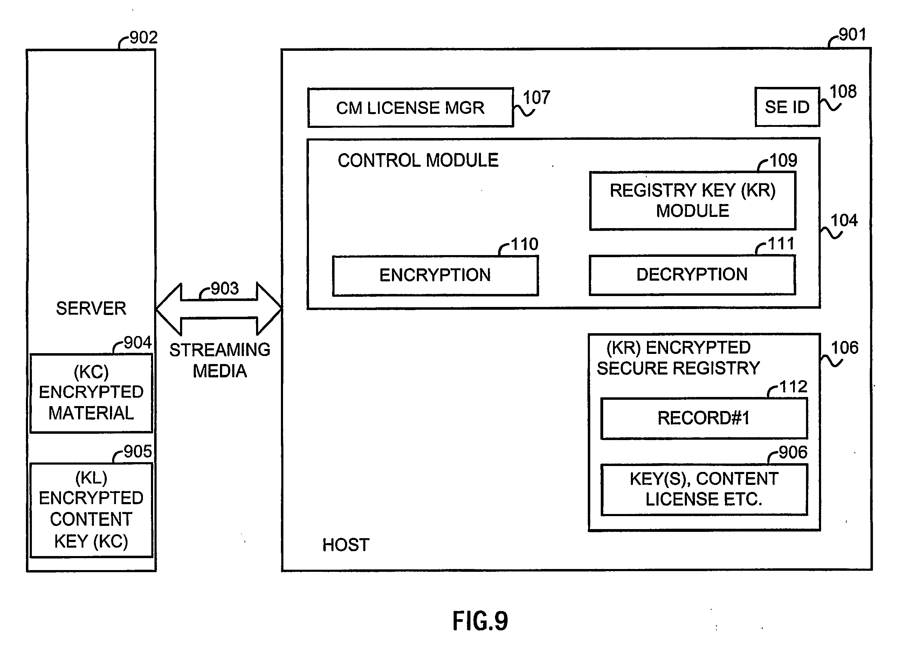

**FIG. 9** illustrates a system including a host **901** and a server **902** communicating through a communication medium **903.** The host **901** is similarly configured as the host **201** of **FIG. 2,** for receiving a copy of encrypted material **904** stored on the server **902** as streaming media, such as in an MPEG-4 bit stream, over the communication medium **903.** The encrypted material **904** is encrypted with at least one content key (KC), which in turn, is encrypted with at least one license key (KL). The host **901** is further configured to receive the encrypted at least one content key **905** such as, for example, in the IPMP ("Intellectual Property Management & Protection") stream that is provided along with encrypted material in an MPEG-4 bit stream. U.S. Non-Provisional Patent Application Ser. No. / , entitled "Method, Apparatus And System for Securely Providing Material to a Licensee of the Material," filed , 2001, assigned to the same assignee as the present invention and incorporated in its entirety herein by this reference, describes one such an example. Access and usage of the encrypted material **904** is then performed in a similar manner as described, for example, in reference to **FIG. 8,** and other examples described herein as applicable.

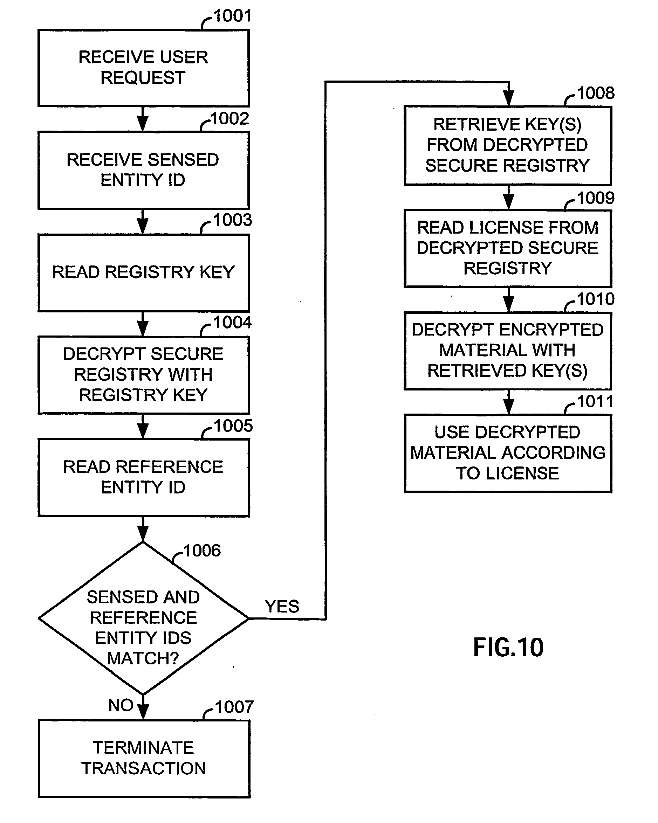

**FIG. 10** illustrates a flow diagram of a method for accessing material that is implemented, for examples, by the host described in reference to **FIG. 3.** In **1001,** a control module on a host receives a request from a user of the host to use material that is stored in encrypted form on the host. In **1002,** in response to such request, the control module either receives after requesting from an entity or retrieves from storage in the entity, a sensed entity identification ("ID"). In **1003,** the control module reads a registry key preferably provided by a registry key module. In **1004,** the control module decrypts a secure registry on the host with the registry key to generate a decrypted version of the secure registry. In **1005,** the control module receives or retrieves a reference entity identification ("ID"). In **1006,** the control module compares the sensed entity ID with the reference entity ID to determine whether the IDs match. If they do not match (i.e., are different), then in **1007,** the control module terminates the transaction.

On the other hand, if they do match (i.e., are the same), then in **1008,** the control module reads or retrieves at least one key from the decrypted version of the secure registry, and in **1009,** the control module reads or retrieves usage rights contained in a license from the decrypted version of the secure registry. The retrieved at least one key in this case may be at least one content key that is used to decrypt the requested encrypted material, or it may be at least one license key that is used to decrypt an encrypted at least one content key, which in turn, is used to decrypt the requested encrypted material. In **1010,** the requested encrypted material is decrypted using the at least one key, and in **1011,** the user is allowed to use the decrypted material according to the terms of the license. The control module may perform **1010** and **1011,** or a plug-in module to a media or content player may perform **1010** and **1011** after securely receiving the at least one retrieved key from the control module and the encrypted material from the control module or other source.

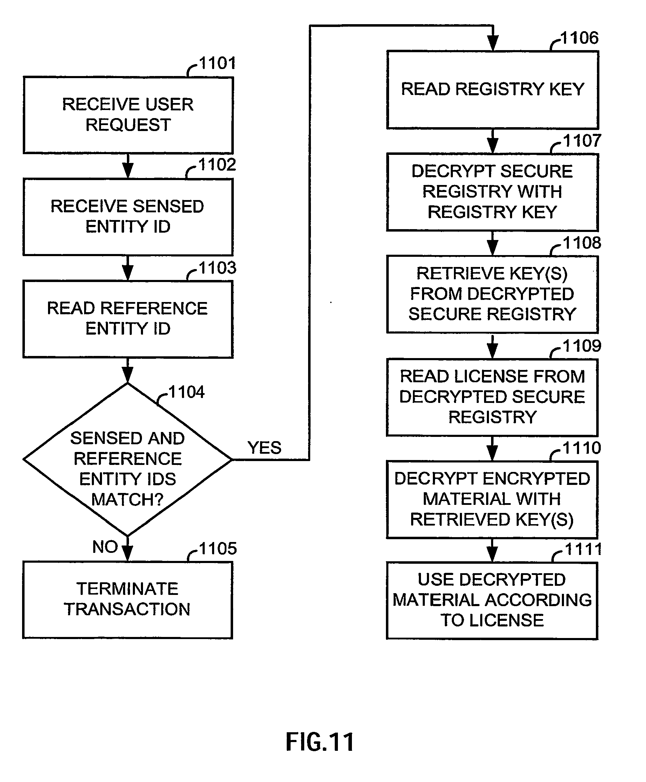

**FIG. 11** illustrates a flow diagram of a method for accessing material that is implemented, for example, by the host described in reference to **FIG. 4.** In **1101,** a control module on a host receives a request from a user of the host to use material that is stored in encrypted form on the host. In **1102,** in response to such request, the control module either receives after requesting from an entity or retrieves from storage in the entity, a sensed entity ID. In **1103,** the control module receives or retrieves a reference entity ID. In **1104,** the control module compares the sensed entity ID with the reference entity ID to determine whether the IDs match. If they do not match (i.e., are different), then in **1105,** the control module terminates the transaction.

On the other hand, if they do match (i.e., are the same), then in **1106,** the control module reads a registry key preferably provided by a registry key module. In **1107,** the control module decrypts a secure registry on the host with the registry key to generate a decrypted version of the secure registry. In **1108,** the control module reads or retrieves at least one key from the decrypted version of the secure registry, and in **1109,** the control module reads or retrieves usage rights contained in a license from the decrypted version of the secure registry. The retrieved at least one key in this case may be at least one content key that is used to decrypt the requested encrypted material, or it may be at least one license key that is used to decrypt an encrypted at least one content key, which in turn, is used to decrypt the requested encrypted material. In **1110,** the requested encrypted material is decrypted using the at least one key, and in **1111,** the user is allowed to use the decrypted material according to the terms of the license. The control module may perform **1110** and **1111,** or a plug-in module to a media or content player may perform 1110 and **1111** after securely receiving the at least one retrieved key from the control module and the encrypted material from the control module or other source.

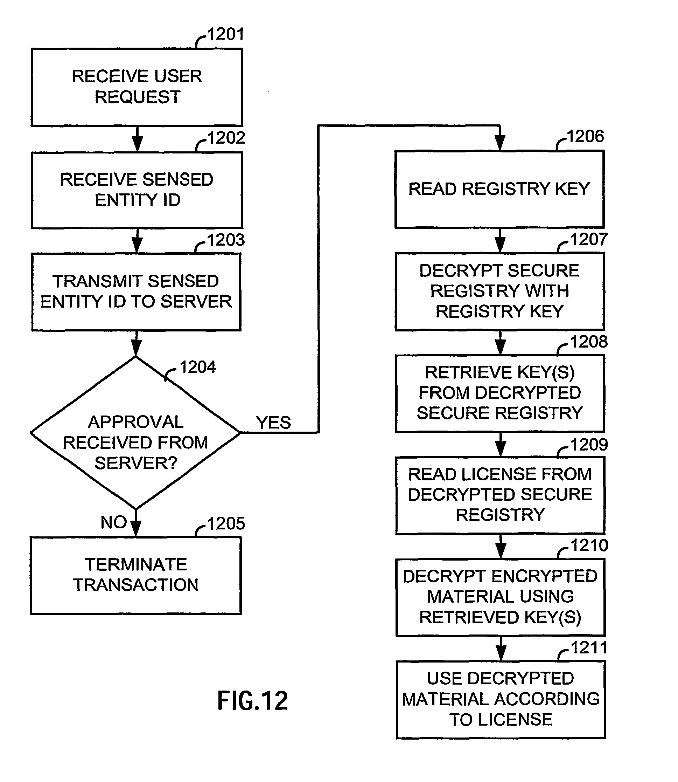

**FIG. 12** illustrates a flow diagram of a method for accessing material that is implemented, for example, by the system described in reference to **FIG. 5.** In **1201,** a control module on a host receives a request from a user of the host to use material that is stored in encrypted form on the host. In **1202,** the control module next receives a sensed entity ID uniquely corresponding to either the host or the user of the host. In **1203,** the control module transmits the sensed entity ID to a remote server. In **1204,** the control module receives either an approval or disapproval for the transaction from the remote server. Approval is received if the sensed entity ID matches with a reference entity ID stored on the remote server. Conversely, a disapproval of the transaction is received if the there is no match.

In **1205,** the control module terminates the transaction if a disapproval of the transaction is received. On the other hand, if approval is received, in **1206,** the control module reads a registry key provided by a registry key module. In **1207,** the control module decrypts a secure registry on the host with the registry key to generate a decrypted version of the secure registry. In **1208,** the control module reads or retrieves at least one key from the decrypted version of the secure registry that is useful for accessing the encrypted material. In one embodiment, the at least one key is at least one content key (KC) used for decrypting the encrypted material. In another embodiment, the at least one key is at least one license key (KL) used for decrypting an encrypted version of the at least one content key (KC). In **1209,** the control module reads or retrieves usage rights contained in a license from the decrypted version of the secure registry.

In **1210,** the requested encrypted material is decrypted using the retrieved keys. In one embodiment, where the at least one key is at least one content key (KC), the at least one content key (KC) is used to directly decrypt the encrypted material. In another embodiment, where the at least one key is at least one license key (KL), the at least one license key (KL) is used to decrypt the encrypted at least one content key (KC), which in turn, is used to decrypt the encrypted material. In **1211,** the user is allowed to use the decrypted material according to the terms of the license. The control module may perform **1210** and **1211** or a player plug-in may perform them. In the case of the player plug-in performing **1210** and **1211,** the control module first securely transmits the at least one key and the terms of the license to the player plug-in, using, for example, a conventional acknowledgement and key exchange procedure such as Diffie-Hellman.

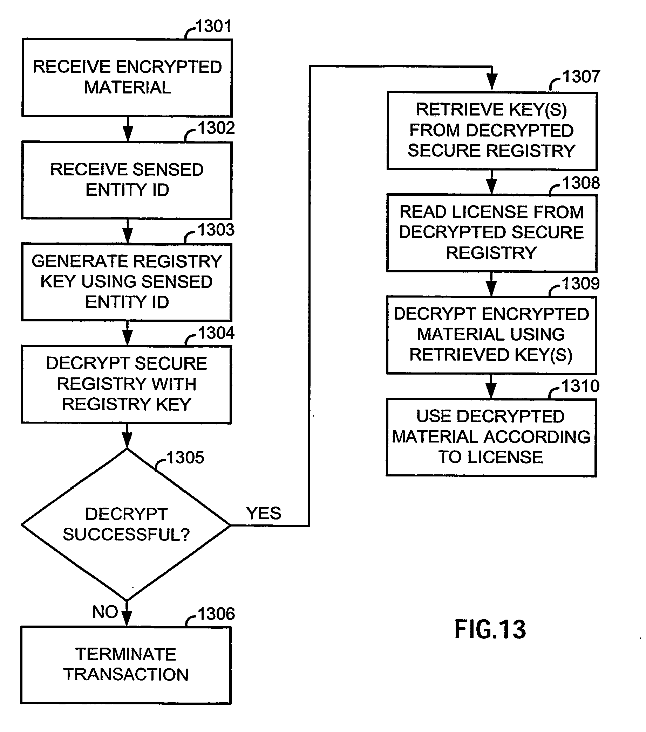

**FIG. 13** illustrates a flow diagram of a method for accessing material that is implemented, for examples, by the hosts described in reference to **FIGS. 6** and **7.** In **1301,** a control module on a host receives a request from a user of the host to use material that is stored in encrypted form on the host. In **1302,** the control module next receives a sensed entity ID uniquely corresponding to either the host or the user of the host. In **1303,** the control module generates a registry key (KR) using the sensed entity ID. In **1304,** the control module generates a decrypted version of an encrypted secure registry with the registry key (KR). Since the secure registry had been previously encrypted with a registry key (KR) corresponding to the original sensed entity ID, only a registry key generated from the original sensed entity ID is capable of decrypting the secure registry. The original sensed entity ID is also referred to herein as the reference entity ID.

In **1305,** the control module makes a determination whether or not the decryption of the secure registry was successful. In this regard, it is implicit that the sensed entity ID must be the same as the reference entity ID in order for the generated registry key (KR) to successfully decrypt the encrypted secure registry. For this reason, the secure registry is also referred to as being entity-locked. If the decryption was unsuccessful, then in **1306,** the control module terminates the transaction. On the other hand, if the decryption was successful, then in **1307,** the control module reads or retrieves at least one key from the decrypted version of the encrypted secure registry; in **1308,** the control module reads a license including usage rights from the decrypted version of the secure registry; in **1309,** the encrypted material is decrypted using the retrieved at least one key; and in **1310,** the user is allowed to use the decrypted material according to the terms of the license, wherein **1307∼1310** are performed in much the same manner as respectively corresponding **1208~1211** of **FIG. 12.**

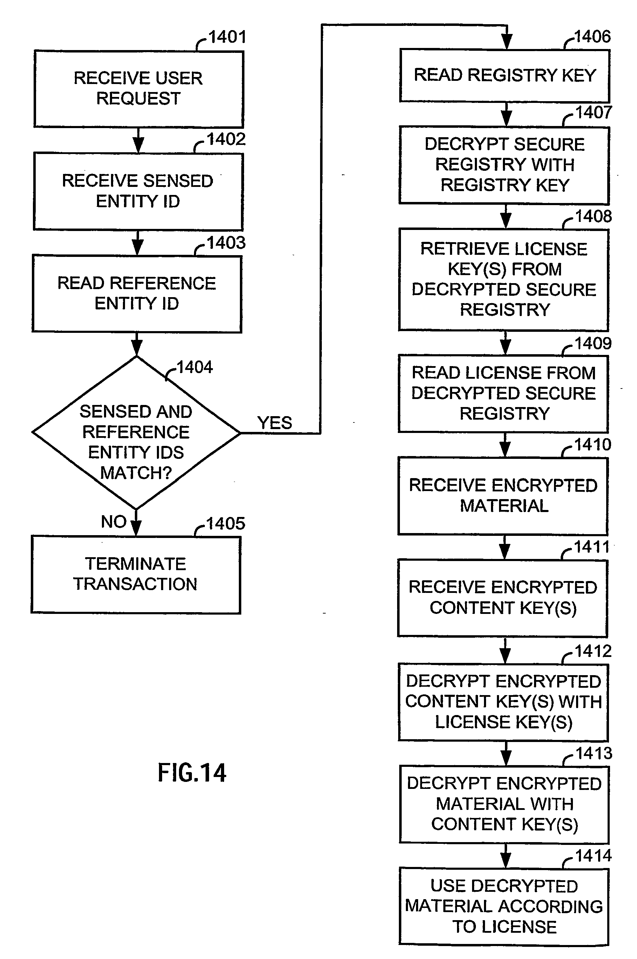

**FIG. 14** illustrates a flow diagram of a method for accessing material that is implemented, for example, by the system described in reference to **FIG. 9.** In the method, **1401~1407** are performed by a control module in much the same manner as respectively corresponding **1101~1107** of **FIG. 11.** In this method, however, the at least one content key (KC) is encrypted with at least one license key (KL) and provided along with material that is encrypted with the at least one content key to the host. Therefore, in **1408,** the control module reads or retrieves the at least one license key (KL) from the decrypted version of the secure registry, and in **1409,** it reads or retrieves usage rights contained in a license from the decrypted version of the secure registry. In **1410** and **1411,** the control module then receives the encrypted material and the encrypted at least one content key (KC), for example, in an MPEG-4 bit stream and its corresponding IPMP stream. In **1412~1414,** a plug-in module to a media or content player then, preferably, processes the received material "on-the-fly" after securely receiving the at least one license key (KL) and corresponding usage rights from the control module. The plug-in module preferably does this by generating a decrypted version of the encrypted at least one content key (KC) using the at least one license key (KL) in **1412,** generating a decrypted version of the encrypted material using the decrypted version of the encrypted at least one content key (KC) in **1413,** and allowing the user to use the decrypted version of the encrypted material according to the usage rights in **1414.**

In the case where the received encrypted material and encrypted at least one content key (KC) are not processed "on-the-fly", but stored instead in one or more files on the host such as **105** and **802** in **FIG. 8,** the control module simply processes the stored files according to the method of **FIG. 14** without performing **1410** and **1412.**

Although the various aspects of the invention have been described with respect to preferred embodiments, it will be understood that the invention is entitled to full protection within the full scope of the appended claims.

## Claims

1. Apparatus for accessing encrypted material (105, 205, 904), said apparatus comprising a secure registry (106) encrypted with a registry key (KR) and storing access and other information for the encrypted material including at least one key (KC, KL) for use in decrypting said material (105, 205, 904), and a control module (104) arranged to decrypt the secure registry (106) using the registry key (KR) to retrieve said at least one key (KC, KL), the control module (104) also being arranged to decrypt said encrypted material (105, 205, 904) using the retrieved key (KC, KL),
the apparatus being **characterised in that** an entity having a unique sensed entity identification (108) is associated with the secure registry (106) such that said secure registry is entity-locked,
and **in that** the registry key (KR) is associated with the sensed entity identification (108) such that decryption of said secure registry utilising said registry key (KR) is only possible where the sensed entity identification (108) matches a reference entity identification.

2. Apparatus as claimed in Claim 1, further comprising a comparison module (305, 405, 505) arranged to compare a stored reference entity identification with said sensed identity identification (108), use of the registry key (KR) to decrypt the secure registry being allowed only where the sensed entity identification (108) matches the stored reference entity identification.

3. Apparatus as claimed in Claim 1, further comprising a registry key generator (602) arranged to generate a registry key (KR) from the sensed entity identification (108), the generated registry key (KR) being unique to the sensed entity identification (108) such that decryption of the secure registry (106) by the generated registry key (KR) is not available to an unauthorised entity which is not associated with the secure registry (106).

4. Apparatus as claimed in any preceding claim, wherein said sensed entity identification (108) uniquely identifies a hardware device connectable to said apparatus.

5. Apparatus as claimed in Claim 4, wherein said identified hardware device is a smartcard.

6. Apparatus as claimed in Claim 4, wherein said identified hardware device is a content storage unit.

7. Apparatus as claimed in any of Claims 1 to 3, wherein said sensed entity identification (108) uniquely identifies a user of said apparatus.

8. Apparatus as claimed in Claim 7, wherein said sensed entity identification (108) is a credit card number.

9. Apparatus as claimed in Claim 7, wherein said sensed entity identification (108) is a predefined user identification.

10. Apparatus as claimed in Claim 7, wherein said sensed entity identification (108) is a biometrics based identification.

11. Apparatus as claimed in Claim 10, wherein said biometrics based identification is a fingerprint of said user of said apparatus.

12. Apparatus as claimed in Claim 10, wherein said biometrics based identification is a speech of said user of said apparatus.

13. Apparatus as claimed in any of Claims 1 to 3, wherein said sensed entity identification (108) uniquely identifies said apparatus.

14. Apparatus as claimed in Claim 13, wherein said sensed entity identification (108) is a computer identification.

15. Apparatus as claimed in Claim 13, wherein said sensed entity identification (108) is a network interface card identification.

16. Apparatus as claimed in Claim 13, wherein said sensed entity identification (108) is a hard disk drive identification.

17. Apparatus as claimed in any preceding claim, wherein said control module (104) receives the encrypted material as streaming media (203, 903).

18. Apparatus as claimed in Claim 17, wherein said streaming media is in MPEG-4 format encrypted with at least one content key (KC), and said control module (104) receives said at least one content key (KC) encrypted with said at least one key (KL).

19. Apparatus as claimed in Claim 18, wherein said at least one key comprises at least one license key (KL) corresponding to a license to use said material.

20. Apparatus as claimed in Claim 18, wherein said streaming media is in MPEG-4 format encrypted with at least one content key (KC), and said control module (104) receives said at least one content key encrypted with a public key of said apparatus, and said at least one key comprises a private key of said apparatus.

21. A method for accessing encrypted material (105, 205, 904), where the material has been encrypted using at least one key (KC, KL) which is stored in a secure registry (106) together with access and other information for the encrypted material, and where the secure registry (106) is associated with an entity having a unique sensed entity identification (108) such that the secure registry is entity-locked,
the method comprising the steps of matching the sensed entity identification (108) with a reference entity identification to obtain an associated registry key,
decrypting the secure registry (106) using the registry key (KR) obtained,
retrieving said at least one key (KC, KL) from the decrypted secure registry (106), and
decrypting said encrypted material (105, 205, 904) using said retrieved key.

22. A method as claimed in Claim 21, further comprising encrypting the secure registry (106) using the registry key (KR) after a temporary period when the decrypted secure registry is being used.

23. A method as claimed in Claim 22, further comprising generating the registry key (KR) from the sensed entity identification (108) and using the generated registry key to encrypt the secure registry (106).

24. A method as claimed in Claim 23, wherein the step of matching the sensed entity identification (108) with a reference entity identification to obtain an associated registry key comprises generating the registry key (KR) from the sensed entity identification (108).

25. A method as claimed in Claim 21 or Claim 22, wherein the step of matching the sensed entity identification (108) with a reference entity identification to obtain an associated registry key comprises:
comparing the sensed entity identification (108) against a stored reference entity identification, and
enabling decryption of said secure registry by said registry key (KR) only if said stored reference entity identification matches said sensed entity identification.

26. A method as claimed in any of Claims 21 to 25, further comprising receiving said encrypted material as streaming media.

27. A method as claimed in Claim 26, wherein said streaming media is in MPEG-4 format and is encrypted with at least one content key, the method further comprising:
receiving said at least one content key encrypted with said at least one key,
decrypting said at least one content key using said at least one key, and
decrypting said encrypted material with said at least one content key.

28. A method as claimed in any of Claims 21 to 25, further comprising receiving said encrypted material as a file.

29. A method as claimed in Claim 28, wherein said file is in MPEG-4 format and is encrypted with at least one content key, the method further comprising:
receiving said at least one content key encrypted with said at least one key,
decrypting said at least one content key using said at least one key; and
decrypting said encrypted material with said at least one content key.

## Patentansprüche

1. Vorrichtung zum Zugreifen auf verschlüsseltes Material (105, 205, 904), wobei die Vorrichtung eine sichere Registrierungsdatenbank (106), die mit einem Registrierungsdatenbankschlüssel (KR) verschlüsselt ist und Zugriffsinformationen sowie andere Informationen für das verschlüsselte Material speichert, einschließlich mindestens einen Schlüssel (KC, KL) zur Verwendung für die Entschlüsselung des Materials (105, 205, 904), und ein Steuermodul (104) aufweist, das ausgestaltet ist, um die sichere Registrierungsdatenbank (106) unter Verwendung des Registrierungsdatenbankschlüssels (KR) zu entschlüsseln, um den mindestens einen Schlüssel (KC, KL) zu erhalten, wobei das Steuermodul (104) ferner ausgestaltet ist, um das verschlüsselte Material (105, 205, 904) unter Verwendung des erhaltenen Schlüssels (KC, KL) zu entschlüsseln,
wobei die Vorrichtung **dadurch gekennzeichnet ist, dass** eine Entität mit einer eindeutigen erfassten Entitäts-Identifikation (108) mit der sicheren Registrierungsdatenbank (106) in Beziehung steht, so dass die sichere Registrierungsdatenbank entitätsverriegelt ist,
und dass der Registrierungsdatenbankschlüssel (KR) mit der erfassten Entitäts-Identifikation (108) so in Beziehung steht, dass die Entschlüsselung der sicheren Registrierungsdatenbank unter Verwendung des Registrierungsdatenbankschlüssels (KR) nur möglich ist, wenn die erfasste Entitäts-Identifikation (108) mit einer Referenz-Entitäts-Identifikation übereinstimmt.

2. Vorrichtung nach Anspruch 1, außerdem mit einem Vergleichsmodul (305, 405, 505), das ausgestaltet ist, um eine gespeicherte Referenz-Entitäts-Identifikation mit der erfassten Entitäts-Identifikation (108) zu vergleichen, wobei die Verwendung des Registrierungsdatenbankschlüssels (KR) zum Entschlüsseln der sicheren Registrierungsdatenbank nur dann erlaubt ist, wenn die erfasste Entitäts-Identifikation (108) mit der gespeicherten Referenz-Entitäts-Identifikation übereinstimmt.

3. Vorrichtung nach Anspruch 1, außerdem mit einem Registrierungsdatenbankschlüssel-Generator (602), der ausgestaltet ist, um einen Registrierungsdatenbankschlüssel (KR) aus der erfassten Entitäts-Identifikation (108) zu generieren, wobei der generierte Registrierungsdatenbankschlüssel (KR) bezüglich der erfassten Entitäts-Identifikation (108) eindeutig ist, so dass das Entschlüsseln der sicheren Registrierungsdatenbank (106) durch den generierten Registrierungsdatenbankschlüssel (KR) für eine unberechtigte Entität nicht verfügbar ist, die nicht mit der sicheren Registrierungsdatenbank (106) in Beziehung steht.

4. Vorrichtung nach einem der vorhergehenden Ansprüche, bei der die erfasste Entitäts-Identifikation (108) eindeutig eine Hardware-Vorrichtung identifiziert, die mit der Vorrichtung verbunden werden kann.

5. Vorrichtung nach Anspruch 4, bei der die identifizierte Hardware-Vorrichtung eine Smartcard ist.

6. Vorrichtung nach Anspruch 4, bei der die identifizierte Hardware-Vorrichtung eine Inhaltsspeichereinheit ist.

7. Vorrichtung nach einem der Ansprüche 1 bis 3, bei der die erfasste Entitäts-Identifikation (108) eindeutig einen Benutzer der Vorrichtung identifiziert.

8. Vorrichtung nach Anspruch 7, bei der die erfasste Entitäts-Identifikation (108) eine Kreditkartennummer ist.

9. Vorrichtung nach Anspruch 7, bei der die erfasste Entitäts-Identifikation (108) eine vordefinierte Benutzer-Identifikation ist.

10. Vorrichtung nach Anspruch 7, bei der die erfasste Entitäts-Identifikation (108) eine auf Biometriken basierende Identifikation ist.

11. Vorrichtung nach Anspruch 10, bei der die auf Biometriken basierende Identifikation ein Fingerabdruck des Benutzers der Vorrichtung ist.

12. Vorrichtung nach Anspruch 10, bei der die auf Biometriken basierende Identifikation die Stimme des Benutzers der Vorrichtung ist.

13. Vorrichtung nach einem der Ansprüche 1 bis 3, bei der die erfasste Entitäts-Identifikation (108) die Vorrichtung eindeutig identifiziert.

14. Vorrichtung nach Anspruch 13, bei der die erfasste Entitäts-Identifikation (108) eine Computer-Identifikation ist.

15. Vorrichtung nach Anspruch 13, bei der die erfasste Entitäts-Identifikation (108) eine Netzwerk-Schnittstellenkarten-Identifikation ist.

16. Vorrichtung nach Anspruch 13, bei der die erfasste Entitäts-Identifikation (108) eine Festplatten-Identifikation ist.

17. Vorrichtung nach einem der vorhergehenden Ansprüche, bei der das Steuermodul (104) das verschlüsselte Material als ein Strömungsmedium (203, 903) empfängt.

18. Vorrichtung nach Anspruch 17, bei der das Strömungsmedium ein MPEG-4-Format hat, das mit mindestens einem Inhaltsschlüssel (KC) verschlüsselt ist, und das Steuermodul (104) den mindestens einen Inhaltsschlüssel (KC) empfängt, der mit dem mindestens einen Schlüssel (KL) verschlüsselt ist.

19. Vorrichtung nach Anspruch 18, bei der der mindestens eine Schlüssel mindestens einen Lizenzschlüssel (KL) aufweist, der einer Lizenz zur Verwendung des Materials entspricht.

20. Vorrichtung nach Anspruch 18, bei der das Strömungsmaterial ein MPEG-4-Format hat, das mit mindestens einem Inhaltsschlüssel (KC) verschlüsselt ist, und das Steuermodul (104) den mindestens einen Inhaltsschlüssel empfängt, der mit einem öffentlichen Schlüssel der Vorrichtung verschlüsselt ist, und der mindestens eine Schlüssel einen privaten Schlüssel der Vorrichtung beinhaltet.

21. Verfahren zum Zugreifen auf verschlüsseltes Material (105, 205, 904), bei dem das Material unter Verwendung von mindestens einem Schlüssel (KC, KL) verschlüsselt ist, der in einer sicheren Registrierungsdatenbank (106) zusammen mit Zugriffsinformationen und anderen Informationen für das verschlüsselte Material gespeichert ist, und bei dem die sichere Registrierungsdatenbank (106) mit einer Entität in Beziehung steht, die eine eindeutige erfasste Entitäts-Identifikation (108) hat, so dass die sichere Registrierungsdatenbank entitätsverriegelt ist,
wobei das Verfahren die Schritte beinhaltet: in Übereinstimmung Bringen der erfassten Entitäts-Identifikation (108) mit einer Referenz-Entitäts-Identifikation, um einen zugehörigen Registrierungsdatenbankschlüssel zu erhalten,
Entschlüsseln der sicheren Registrierungsdatenbank (106) unter Verwendung des erhaltenen Registrierungsdatenbankschlüssels (KR),
Erhalten des mindestens einen Schlüssels (KC, KL) aus der entschlüsselten sicheren Registrierungsdatenbank (106), und
Entschlüsseln des verschlüsselten Materials (105, 205, 904) unter Verwendung des erhaltenen Schlüssels.

22. Verfahren nach Anspruch 21, außerdem mit dem Verschlüsseln der sicheren Registrierungsdatenbank (106) unter Verwendung des Registrierungsdatenbankschlüssels (KR) nach einer Zeitperiode, wenn die entschlüsselte sichere Registrierungsdatenbank verwendet wird.

23. Verfahren nach Anspruch 22, außerdem mit dem Generieren des Registrierungsdatenbankschlüssels (KR) aus der erfassten Entitäts-Identifikation (108) und Verwenden des generierten Registrierungsdatenbankschlüssels, um die sichere Registrierungsdatenbank (106) zu verschlüsseln.

24. Verfahren nach Anspruch 23, bei dem der Schritt des in Übereinstimmung Bringens der erfassten Entitäts-Identifikation (108) mit der Referenz-Entitäts-Identifikation, um einen zugehörigen Registrierungsdatenbankschlüssel zu erhalten, das Generieren des Registrierungsdatenbankschlüssels (KR) aus der erfassten Entitäts-Identifikation (108) beinhaltet.

25. Verfahren nach Anspruch 21 oder Anspruch 22, bei dem der Schritt des in Übereinstimmung Bringens der erfassten Entitäts-Identifikation (108) mit einer Referenz-Entitäts-Identifikation, um einen zugehörigen Registrierungsdatenbankschlüssel zu erhalten, beinhaltet:
Vergleichen der erfassten Entitäts-Identifikation (108) mit einer gespeicherten Referenz-Entitäts-Identifikation, und
Aktivieren der Entschlüsselung der sicheren Registrierungsdatenbank durch den Registrierungsdatenbankschlüssel (KR) nur dann, wenn die gespeicherte Referenz-Entitäts-Identifikation mit der erfassten Entitäts-Identifikation übereinstimmt.

26. Verfahren nach einem der Ansprüche 21 bis 25, außerdem mit dem Empfangen des verschlüsselten Materials als Strömungsmedium.

27. Verfahren nach Anspruch 26, bei dem das Strömungsmedium ein MPEG-4-Format hat und mit mindestens einem Inhaltsschlüssel verschlüsselt ist, wobei das Verfahren ferner umfasst:
Empfangen des mindestens einen Inhaltsschlüssels, der mit dem mindestens einen Schlüssel verschlüsselt ist,
Entschlüsseln des mindestens einen Inhaltsschlüssels unter Verwendung des mindestens einen Schlüssels, und
Entschlüsseln des verschlüsselten Materials mit dem mindestens einen Inhaltsschlüssel.

28. Verfahren nach einem der Ansprüche 21 bis 25, außerdem mit dem Empfangen des verschlüsselten Materials als eine Datei.

29. Verfahren nach Anspruch 28, bei der die Datei ein MPEG-4-Format hat und mit mindestens einem Inhaltsschlüssel verschlüsselt ist, wobei das Verfahren ferner beinhaltet:
Empfangen des mindestens einen Inhaltsschlüssels, der mit dem mindestens einen Schlüssel verschlüsselt ist,
Entschlüsseln des mindestens einen Inhaltsschlüssels unter Verwendung des mindestens einen Schlüssels, und
Entschlüsseln des verschlüsselten Materials mit dem mindestens einen Inhaltsschlüssel.

## Revendications

1. Dispositif destiné à permettre l'accès à un matériel chiffré (105, 205, 904), ledit dispositif comprenant un registre sécurisé (106) chiffré avec une clé de registre (KR) et stockant une information d'accès et d'autres informations pour le matériel chiffré, comprenant au moins une clé (KC, KL) destinée à être utilisée dans le déchiffrement dudit matériel (105, 205, 904), et un module de commande (104) configuré pour déchiffrer le registre sécurisé (106) en utilisant la clé de registre (KR) pour récupérer ladite au moins une clé (KC, KL), le module de commande (104) étant aussi configuré pour déchiffrer ledit matériel chiffré (105, 205, 904) en utilisant la clé récupérée (KC, KL),
le dispositif étant **caractérisé en ce qu'**une entité possédant une identification d'entité détectée unique (108) est associée au registre sécurisé (106) de telle manière que ledit registre sécurisé soit verrouillé sur l'entité,
et **en ce que** la clé de registre (KR) est associée à l'identification d'entité détectée (108) de telle manière que le déchiffrement dudit registre sécurisé utilisant ladite clé de registre (KR) ne soit possible que quand l'identification d'entité détectée (108) correspond à une identification d'entité de référence.

2. Dispositif selon la revendication 1, comprenant de plus un module de comparaison (305, 405, 505) configuré pour comparer une identification d'entité de référence stockée à ladite identification d'entité détectée (108), l'utilisation de la clé de registre (KR) pour déchiffrer le registre sécurisé n'étant autorisée que quand l'identification d'entité détectée (108) correspond à l'identification d'entité de référence stockée.

3. Dispositif selon la revendication 1, comprenant de plus un générateur de clé de registre (602) configuré pour générer une clé de registre (KR) à partir de l'identification d'entité détectée (108), la clé de registre générée (KR) correspondant de manière unique à l'identification d'entité détectée (108) de manière que le déchiffrement du registre sécurisé (106) par la clé de registre générée (KR) ne soit pas possible pour une entité non autorisée qui n'est pas associée au registre sécurisé (106).

4. Dispositif selon l'une quelconque des revendications précédentes, dans lequel ladite identification d'entité détectée (108) identifie de manière unique un appareil matériel connectable audit dispositif.

5. Dispositif selon la revendication 4, dans lequel ledit appareil matériel identifié est une carte intelligente.

6. Dispositif selon la revendication 4, dans lequel ledit appareil matériel identifié est une unité de stockage de contenus.

7. Dispositif selon l'une quelconque des revendications 1 à 3, dans lequel l'identification d'entité détectée (108) identifie de manière unique un utilisateur dudit dispositif.

8. Dispositif selon la revendication 7, dans lequel ladite identification d'entité détectée (108) est un numéro de carte de crédit.

9. Dispositif selon la revendication 7, dans lequel ladite identification d'entité détectée (108) est une identification d'utilisateur prédéfinie.

10. Dispositif selon la revendication 7, dans lequel ladite identification d'entité détectée (108) est une identification basée sur des mesures biométriques.

11. Dispositif selon la revendication 10, dans lequel ladite identification basée sur des mesures biométriques est une empreinte digitale dudit utilisateur dudit dispositif.

12. Dispositif selon la revendication 10, dans lequel ladite identification basée sur des mesures biométriques est une phrase dite par ledit utilisateur dudit dispositif.

13. Dispositif selon l'une quelconque des revendications 1 à 3, dans lequel ladite identification d'entité détectée (108) identifie de manière unique ledit dispositif.

14. Dispositif selon la revendication 13, dans lequel ladite identification d'entité détectée (108) est une identification d'ordinateur.

15. Dispositif selon la revendication 13, dans lequel ladite identification d'entité détectée (108) est une identification de carte d'interface réseau.

16. Dispositif selon la revendication 13, dans lequel ladite identification d'entité détectée (108) est une identification de régisseur à disque dur.

17. Dispositif selon l'une quelconque des revendications précédentes, dans lequel ledit module de commande (104) reçoit le matériel chiffré sous la forme d'un support à la volée (203, 903).

18. Dispositif selon la revendication 17, dans lequel ledit support à la volée est un support au format MPEG-4 chiffré avec au moins une clé de contenu (KC), et ledit module de commande (104) reçoit ladite au moins une clé de contenus (KC) chiffrée grâce à ladite au moins une clé (KL).

19. Dispositif selon la revendication 18, dans lequel ladite au moins une clé comprend au moins une clé de licence (KL) correspondant à une licence d'utilisation dudit matériel.

20. Dispositif selon la revendication 18, dans lequel ledit support à la volée est un support au format MPEG-4 chiffré grâce à au moins une clé de contenu (KC), et ledit module de commande (104) reçoit ladite au moins une clé de contenu chiffrée grâce à une clé publique dudit dispositif, et ladite au moins une clé comprend une clé privée dudit dispositif.

21. Procédé permettant d'accéder à un matériel chiffré (105, 205, 904), où le matériel a été chiffré en utilisant au moins une clé (KC, KL) qui est stockée dans un registre sécurisé (106) avec une information d'accès et d'autres informations pour le matériel chiffré, et où le registre sécurisé (106) est associé à une entité possédant une identification d'entité détectée unique (108) de telle manière que le registre sécurisé soit verrouillé sur l'entité,
le procédé comprenant les étapes de mise en correspondance de l'identification d'entité détectée (108) avec une identification d'entité de référence pour obtenir une clé de registre associée,
de déchiffrement du registre sécurisé (106) en utilisant la clé de registre (KR) obtenue,
de récupération de ladite au moins une clé (KC, KL) à partir du registre sécurisé déchiffré (106), et
de déchiffrement dudit matériel chiffré (105, 205, 904) en utilisant ladite clé récupérée.

22. Procédé selon la revendication 21, comprenant de plus le chiffrement du registre sécurisé (106) en utilisant la clé de registre (KR) après une période temporaire quand le registre sécurisé déchiffré est en cours d'utilisation.

23. Procédé selon la revendication 22, comprenant de plus la génération de la clé de registre (KR) à partir de l'identification d'entité détectée (108) et l'utilisation de la clé de registre générée pour chiffrer le registre sécurisé (106).

24. Procédé selon la revendication 23, dans lequel l'étape de mise en correspondance de l'identification d'entité détectée (108) avec une identification d'entité de référence pour obtenir une clé de registre associée comprend la génération de la clé de registre (KR) à partir de l'identification d'entité détectée (108).

25. Procédé selon la revendication 21 ou la revendication 22, dans lequel l'étape de mise en correspondance de l'identification d'entité détectée (108) avec une identification d'entité de référence pour obtenir une clé de registre associée comprend :
la comparaison de l'identification d'entité détectée (108) par rapport à une identification d'entité de référence stockée, et
l'autorisation du déchiffrement dudit registre sécurisé par ladite clé de registre (KR) uniquement si ladite identification d'entité de référence stockée correspond à ladite identification d'entité détectée.

26. Procédé selon l'une quelconque des revendications 21 à 25, comprenant de plus la réception dudit matériel chiffré sous la forme d'un support à la volée.

27. Procédé selon la revendication 26, dans lequel ledit support à la volée est un support au format MPEG-4 et est chiffré grâce à au moins une clé de contenu, le procédé comprenant de plus :
la réception de ladite au moins une clé de contenu, chiffrée grâce à ladite au moins une clé,
le déchiffrement de ladite au moins une clé de contenu en utilisant ladite au moins une clé, et
le déchiffrement dudit matériel chiffré grâce à ladite au moins une clé de contenu.

28. Procédé selon l'une quelconque des revendication 21 à 25, comprenant de plus la réception dudit matériel chiffré sous la forme d'un fichier.

29. Procédé selon la revendication 28, dans lequel ledit fichier est un fichier au format MPEG-4 et est chiffré grâce à au moins une clé de contenu, le procédé comprenant de plus :
la réception de ladite au moins une clé de contenu, chiffrée grâce à ladite au moins une clé,
le déchiffrement de ladite au moins une clé de contenu en utilisant ladite au moins une clé ; et
le déchiffrement dudit matériel chiffré grâce à ladite au moins une clé de contenu.
